# EUROPÄISCHE PATENTANMELDUNG

(11) **EP 2 990 172 A1**
(43) Veröffentlichungstag der Anmeldung: **02.03.2016**
(21) Anmeldenummer: 14002958.8
(22) Anmeldetag: 26.08.2014
(51) Int. Cl.: B28D 1/22, B28D 5/00, B23K 26/30

(54) **Verfahren zum Teilen von plattenförmigen Objekten aus spröden Werkstoffen**

(71) Anmelder: Fraunhofer-Gesellschaft zur Förderung der angewandten Forschung e.V., 80686 München (DE)
(72) Erfinder: Schneider, Jens, D-04105 Leipzig (DE); Schönfelder, Stephan, D-04157 Leipzig (DE); Kaufmann, Kai, D-06108 Halle (DE)
(74) Vertreter: Gagel, Roland

(57) **Zusammenfassung**

Die vorliegende Erfindung betrifft ein Verfahren zum Teilen von plattenförmigen Objekten aus spröden Werkstoffen, bei dem das Objekt (1, 11) zunächst mechanisch belastet wird, um eine gerichtete Spannung senkrecht zur gewünschten Bruchlinie (43) zu erzeugen, und dann während der mechanischen Belastung entlang der gewünschten Bruchlinie (43) mechanisch geschwächt oder thermisch belastet wird, bis das Objekt (1, 11) entlang der gewünschten Bruchlinie (43) bricht. Das Verfahren ermöglicht das Teilen von spröden plattenförmigen Objekten mit minimaler mechanischer und elektrischer Schädigung bei hoher Ausbeute. Das Verfahren passt sich automatisch an unterschiedliche Dicken und Typen der zu teilenden Objekte an.

## Beschreibung

### Technisches Anwendungsgebiet

Die vorliegende Erfindung betrifft ein Verfahren zum Teilen von plattenförmigen Objekten aus spröden Werkstoffen, bei dem eine Kombination aus mechanischer Belastung des Objekts und lokaler mechanischer Schwächung oder lokaler thermischer Belastung entlang einer Sollbruchlinie eingesetzt wird, um das Objekt entlang der Sollbruchlinie zu teilen.

In verschiedenen Anwendungen müssen Objekte bzw. Bauteile aus spröden Werkstoffen möglichst schädigungsarm geteilt werden, um die mechanische und ggf. auch elektrische Zuverlässigkeit der Bauteile nach der Teilung zu gewährleisten. Gerade bei der Verwendung dünner scheibenartiger Substrate für die Mikroelektronik oder die Photovoltaik ist die Aufteilung der Substrate nach der Prozessierung in einzelne Bauteile notwendig und wird derzeit mit unterschiedlichen Trennverfahren durchgeführt. Eine beispielhafte Anwendung ist das Teilen von Solarzellen vor der Herstellung von Solarmodulen. Kleinere Solarzellen mit einem geringen elektrischen Strom führen zu reduzierten Serienwiderstandsverlusten und damit zur Leistungssteigerung in Solarmodulen in einer Größenordnung von 3 bis 5%. Dies erfordert eine Teilung der größeren Solarzellen in kleinere Zellen. Das Teilen der Solarzellen soll dabei mit hoher Ausbeute und geringem Automatisierungsaufwand ohne messbare mechanische und elektrische Schädigung ablaufen.

### Stand der Technik

Für das Teilen bzw. Trennen von plattenförmigen Objekten aus spröden Werkstoffen sind unterschiedliche Techniken bekannt. So kann das Objekt durch mechanisches Sägen, durch Laserschneiden, durch Wasserstrahlschneiden oder mit anderen Bearbeitungsverfahren komplett geteilt werden. Bei spröden Werkstoffen kann das Teilen auch durch Anritzen und nachfolgende mechanische Belastung erreicht werden. So werden bspw. Glasscheiben oft mechanisch mit einem Diamantritzer angeritzt, anschließend über eine Kante gebogen und durch die resultierende Spannung im Material gebrochen. Für Solarzellen ist es auch bekannt, die Sollbruchlinie durch lokale mechanische Schwächung mit einem Laser zu erzeugen und anschließend durch mechanische Belastung zu brechen.

Zum Teilen von Gläsern und Siliziumscheiben sind auch weitere Verfahren, wie das thermische Laserseparieren (TLS) oder das laserthermische Trennen bekannt. Bei diesen Verfahren werden entlang eines gewünschten Rissverlaufes durch lokale thermische Belastung gezielt thermische Spannungen in das Material eingebracht, indem ein Laser das Material erwärmt und bspw. ein nachgeführter Aerosolstrahl den erwärmten Bereich unmittelbar danach kühlt. Die resultierenden thermischen Spannungen führen zum Risswachstum eines vorhandenen Anrisses. Die Wachstumsrichtung des Risses folgt dabei dem lokalen Spannungsfeld, welches über das Bauteil geführt wird. Beispiele für diese Techniken finden sich in der DE 10 2005 038 027 A1 oder der WO 2005/092806 A1.

Die Aufgabe der vorliegenden Erfindung besteht darin, ein Verfahren zum Teilen von plattenförmigen Objekten aus spröden Werkstoffen anzugeben, das eine hohe Ausbeute für das Teilen der Objekte ohne messbare mechanische und elektrische Schädigung aufweist.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren wird in einer ersten Alternative eine Kombination aus mechanischer Belastung des Objekts und lokaler mechanischer Schwächung entlang einer Sollbruchlinie eingesetzt, um das Bauteil entlang der Sollbruchlinie zu teilen. In der zweiten Verfahrensalternative wird die mechanische Belastung mit der lokalen thermischen Belastung durch Erzeugung lokaler thermischer Spannungen kombiniert. Diese lokalen thermischen Spannungen können in gleicher Weise wie beim thermischen Laserseparieren oder laserthermischen Trennen im Bauteil erzeugt werden. Das Verfahren zeichnet sich dadurch aus, dass die Schritte der lokalen mechanischen Schwächung bzw. lokalen thermischen Belastung und der mechanischen Belastung des Bauteils gegenüber dem bekannten Stand der Technik umgekehrt werden. Das Bauteil wird bei dem vorgeschlagenen Verfahren zunächst mechanisch belastet, um eine gerichtete Spannung, insbesondere eine Zugspannung, senkrecht zur gewünschten Bruchlinie, in der vorliegenden Patentanmeldung als Sollbruchlinie bezeichnet, zu erzeugen, und wird dann während dieser mechanischen Belastung entlang der Sollbruchlinie entweder mechanisch geschwächt, bis das Bauteil entlang der Sollbruchlinie bricht. In der zweiten Verfahrensalternative werden während der mechanischen Belastung lokale thermische Spannungen entlang der Sollbruchlinie in das Bauteil eingebracht, bis das Bauteil entlang der Sollbruchlinie bricht.

Mit dieser Vorgehensweise werden unterschiedliche Vorteile erzielt. So werden die Objekte in der ersten Verfahrensalternative zum optimalen Zeitpunkt gebrochen, also genau dann, wenn das Objekt lokal ausreichend mechanisch geschwächt wurde. Die mechanische Schwächung kann dabei durch unterschiedliche Techniken erfolgen, bspw. durch Laserbearbeitung, mechanisches Ritzen oder chemisches Ätzen. Gerade bei Nutzung der Laserbearbeitung wird der Laserstrahl während der mechanischen Belastung des Objekts so oft entlang der Sollbruchlinie geführt, bis das Objekt bricht. In gleicher Weise wird auch beim mechanischen Anritzen der Ritzvorgang so oft wiederholt, bis das Objekt bricht. Damit wird jeweils nur so oft bzw. tief geritzt oder geschwächt, wie dies für das Teilen des Bauteils erforderlich ist. Im Vergleich zu der Vorgehensweise beim Stand der Technik, bei dem das Objekt zunächst entlang der Sollbruchlinie lokal mechanisch geschwächt und in einem anschließenden Schritt mechanisch belastet wird, reduziert sich somit im Mittel die Anzahl der zum Teilen erforderlichen Ritz- bzw. Bearbeitungsvorgänge. Weiterhin ist das Verfahren auch unempfindlich gegenüber Schwankungen der Dicke der zu teilenden Objekte, da diese - unabhängig von ihrer Dicke - jeweils solange geritzt bzw. mechanisch geschwächt werden, bis sie brechen. Dies gilt im Falle von Solarzellen auch für unterschiedliche Zelltypen, an den sich das Verfahren automatisch anpasst. Die lokale mechanische Schwächung wird durch Wiederholung des Bearbeitungsvorgangs einfach solange vergrößert, bis die Solarzelle bricht. Das Verfahren führt damit auch zu einer geringeren mechanischen und elektrischen Schädigung durch das Ritzen bzw. die lokale Materialschwächung.

Ein weiterer Vorteil besteht in der besseren Automatisierbarkeit des Verfahrens. Es ist keine doppelte Ausrichtung jedes Objektes notwendig, wie dies der nächstkommende Stand der Technik für die beiden Schritte der lokalen mechanischen Schädigung und des anschließenden Brechens erfordert. Stattdessen müssen die Werkzeuge für die mechanische Belastung und für die Einbringung der lokalen mechanischen Schädigung nur einmal aufeinander ausgerichtet werden. Anschließend kann diese Ausrichtung für alle Objekte der gleichen Geometrie beibehalten werden. Bei den bekannten Verfahren des Standes der Technik, bei denen zunächst die lokale mechanische Schädigung eingebracht und anschließend das Objekt bis zum Bruch mechanisch belastet wird, kann hingegen durch ungenaues Ausrichten im zweiten Prozessschritt unerwünschter Bruch im Sinne von mechanischen Ausbeuteverlusten entstehen. Durch die Ausführung des Teilens beim vorgeschlagenen Verfahren in nur einem Prozessschritt, d. h. lokale mechanische Schädigung während der mechanischen Belastung des Objekts, ist die für die Durchführung des Verfahrens benötigte Fläche einer entsprechenden Anlage bzw. Vorrichtung gegenüber dem Verfahren des nächstkommenden Standes der Technik reduziert. Die entsprechende Anlage weist somit einen kleineren Footprint auf und es sind zum Teilen eines Objekts weniger Handlingschritte erforderlich.

In einer bevorzugten Ausgestaltung des Verfahrens wird die lokale mechanische Schwächung entlang der Sollbruchlinie durch lokale Modifikation des Werkstoffes oder durch Abtrag des Werkstoffes jeweils mittels Laserbearbeitung mit einem oder mehreren Laserstrahlen durchgeführt. Hierbei werden vorzugsweise Kurz- oder Ultrakurzpulslaser wie bspw. fs-, ps- oder ns-Laser eingesetzt, um die mechanische Schwächung zu erzeugen. Es kann aber auch ein cw-Laser eingesetzt werden. Der oder die Laserstrahlen werden dabei wiederholt entlang bzw. auf der Sollbruchlinie geführt, bis die mechanische Schwächung eine Größe erreicht hat, bei der das Objekt aufgrund der durch die gleichzeitige mechanische Belastung eingebrachten Zugspannung entlang der Sollbruchlinie bricht. Im Gegensatz dazu wird der Laserstrahl beim bekannten thermischen Laserseparieren (TLS) nur ein einziges Mal über die Sollbruchlinie geführt.

Beim vorgeschlagenen Verfahren kann die mechanische Belastung aber auch mit dem thermischen Laserseparieren oder laserthermischen Trennen kombiniert werden. Dies entspricht der zweiten Verfahrensalternative. Dadurch kann der Parameterraum von TLS vergrößert und der Riss über die mechanische Spannung zusätzlich in die gewünschte Richtung gelenkt werden. Beim bisherigen TLS kann das Problem auftreten, dass sich kein Riss bildet oder dass der Riss stoppt, weil die thermische Spannung nicht ausreicht. Dies limitiert z.B. den Parameter Vorschubgeschwindigkeit.

Durch die zusätzliche mechanische Spannung beim hier vorgeschlagenen Verfahren kann dieses Problem vermieden werden. Weiterhin kann durch die gerichtete mechanische Spannung auch verhindert werden, dass z.B. bei monokristallinen Wafern oder Solarzellen der Riss am Rand des Wafers oder der Zelle nicht dem Laser sondern der kristallographischen Vorzugsrichtung folgt.

Die mechanische Belastung wird vorzugsweise durch Dreipunkt- oder durch Vierpunktbiegung erzeugt. Bei der Dreipunktbiegung bzw. Dreipunktbelastung wird das Objekt auf einer Seite auf der Sollbruchlinie (erster Punkt bzw. erste Linie) und auf der gegenüberliegenden Seite an zwei beidseitig von der Sollbruchlinie beabstandeten Stellen (zweiter und dritter Punkt bzw. Linie) jeweils mechanisch belastet, um es entsprechend um die Sollbruchlinie zu biegen. Das Spannungsmaximum verläuft dabei auf bzw. entlang der Sollbruchlinie. Die Sollbruchlinie wird in dieser Ausgestaltung also bereits durch die mechanische Belastung vorgegeben. Bei der Vierpunktbiegung bzw. Vierpunktbelastung wird das Objekt auf einer Seite beidseitig der Sollbruchlinie in einem ersten Abstand zur Sollbruchlinie (erster und zweiter Punkt bzw. Linie) und auf der gegenüberliegenden Seite an zwei wiederum beidseitig von der Sollbruchlinie beabstandeten Stellen in einem zweiten Abstand, der größer als der erste Abstand ist (dritter und vierter Punkt bzw. Linie) jeweils mechanisch belastet, um es um die Sollbruchlinie zu biegen. Bei dieser Belastung entsteht im Bereich der Sollbruchlinie ein gleichmäßiges Spannungsfeld senkrecht zur Sollbruchlinie, so dass die Sollbruchlinie durch diese Belastung noch nicht vorgegeben ist. Damit sind die Anforderungen an die Ausrichtung des für die Schwächung eingesetzten Werkzeugs in dieser Ausgestaltung geringer sind als bei der Dreipunktbiegung.

Die mechanische Belastung durch Dreipunktbiegung kann dadurch erzeugt werden, dass das Objekt auf eine Unterlage mit einer geeigneten Erhebung oder Krümmung aufgebracht und beidseitig der Erhebung bzw. dem höchsten Punkt oder der höchsten Linie der Krümmung gegen die Unterlage gedrückt wird. Bei der Unterlage kann es sich bspw. um eine entsprechend gebogene Oberfläche einer Platte oder eines anderen Objekts oder um ein oder mehrere entsprechend ausgebildete, im Querschnitt keilförmige Bauteile handeln. Das Andrücken bzw. Anpressen erfolgt von der gegenüberliegenden Seite der Unterlage und kann bspw. auch über Vakuumsauger erfolgen, mit denen das Objekt in der Anlage gehandhabt wird.

Das vorgeschlagene Verfahren eignet sich bspw. für das Teilen von Solarzellen. Dabei können die Zellen halbiert oder auch in noch kleinere Teile gebrochen werden. Die Solarzellen sind dabei typischerweise bereits fertig prozessiert. Selbstverständlich ist es aber auch möglich, die Trennung bzw. Teilung an nur teilprozessierten Zellen oder Wafern durchzuführen. Das Verfahren lässt sich auch auf andere plattenförmige Objekte anwenden, wie sie bspw. in der Mikroelektronik verwendet werden. So können bspw. Halbleitersubstrate oder Wafer mit dem Verfahren in kleinere Chips zerteilt werden. Auch die Trennung von anderen plattenförmigen Objekten aus spröden Werkstoffen, bspw. die Trennung von Glasscheiben oder Keramikplatten, ist mit dem Verfahren möglich.

### Kurze Beschreibung der Zeichnungen

Das vorgeschlagene Verfahren wird nachfolgend anhand von Ausführungsbeispielen in Verbindung mit den Zeichnungen nochmals näher erläutert. Hierbei zeigen:
- Fig. 1: eine schematische Querschnittsdarstellung eines ersten Beispiels zum Teilen einer Solarzelle;
- Fig. 2: eine schematische Querschnittsdarstellung eines zweiten Beispiels zum Teilen einer Solarzelle;
- Fig. 3: eine schematische Querschnittsdarstellung eines dritten Beispiels zum Teilen einer Solarzelle;
- Fig. 4: eine schematische Querschnittsdarstellung eines vierten Beispiels zum Teilen einer Solarzelle; und
- Fig. 5: eine Draufsicht auf ein plattenförmiges Objekt, in der eine Sollbruchlinie für das Teilen des Objekts angedeutet ist.

### Wege zur Ausführung der Erfindung

Das vorgeschlagene Verfahren wird nachfolgend beispielhaft anhand der Teilung von Solarzellen nochmals näher erläutert. Bei dem Verfahren werden die Zellen gebogen, um eine definierte gerichtete maximale Zugspannung an der zu teilenden Stelle, der Sollbruchlinie, einzubringen. Anschließend wird die jeweilige Zelle während dieser mechanischen Belastung mittels Kurz- oder Ultrakurzpulslaser entlang der Sollbruchlinie solange mechanisch geschwächt, bis die Zelle entlang dieser Linie bricht. Die mechanische Schwächung kann durch Materialmodifikation mittels eines Laserstrahls oder auch durch Materialaufweichung oder Materialabtrag erfolgen. Der gesamte Teilungsvorgang wird dabei in einer Vorrichtung durchgeführt, in der die Zelle mechanisch belastet und gleichzeitig die lokale mechanische Schwächung eingebracht werden kann.

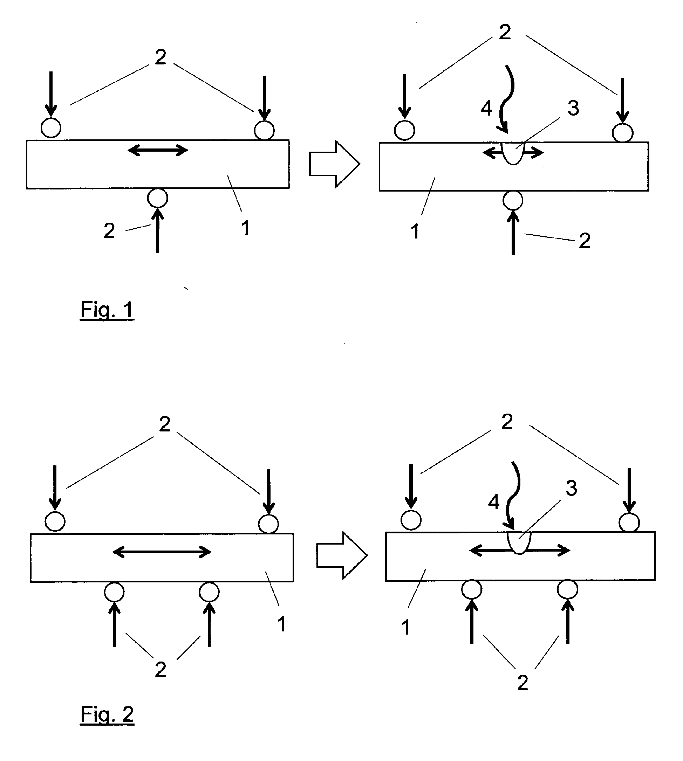

Figur 1 zeigt hierzu schematisch eine Dreipunktbelastung des Objektes 1, bei dem die mechanische Belastung 2 an den drei gekennzeichneten Stellen erfolgt, um das Objekt 1 leicht zu biegen und dadurch eine durch den Doppelpfeil angedeutete mechanische Spannung senkrecht zur Sollbruchlinie im Objekt 1 zu erzeugen. Während dieser Belastung erfolgt dann in diesem Beispiel mit einem Laserstrahl 4 eine Schwächung 3 des Objekts 1 entlang der Sollbruchlinie, wie dies im rechten Teil der Figur 1 angedeutet ist. Der Laserstrahl 4 wird dabei mehrfach über die Sollbruchlinie geführt, bis das Objekt 1 entlang der Sollbruchlinie bricht.

Figur 2 zeigt alternativ eine Vierpunktbelastung des Objektes 1, bei dem die mechanische Belastung 2 an den vier gekennzeichneten Stellen erfolgt, um das Objekt leicht zu biegen und dadurch die durch den Doppelpfeil angedeutete mechanische Spannung senkrecht zur Sollbruchlinie im Objekt 1 zu erzeugen. Während dieser Belastung erfolgt dann in diesem Beispiel wiederum mit einem Laserstrahl 4 eine Schwächung 3 entlang der Sollbruchlinie, wie dies im rechten Teil der Figur 2 angedeutet ist. Der Laserstrahl 4 wird dabei wiederum mehrfach über die Sollbruchlinie geführt, bis das Objekt 1 entlang der Sollbruchlinie, bricht.

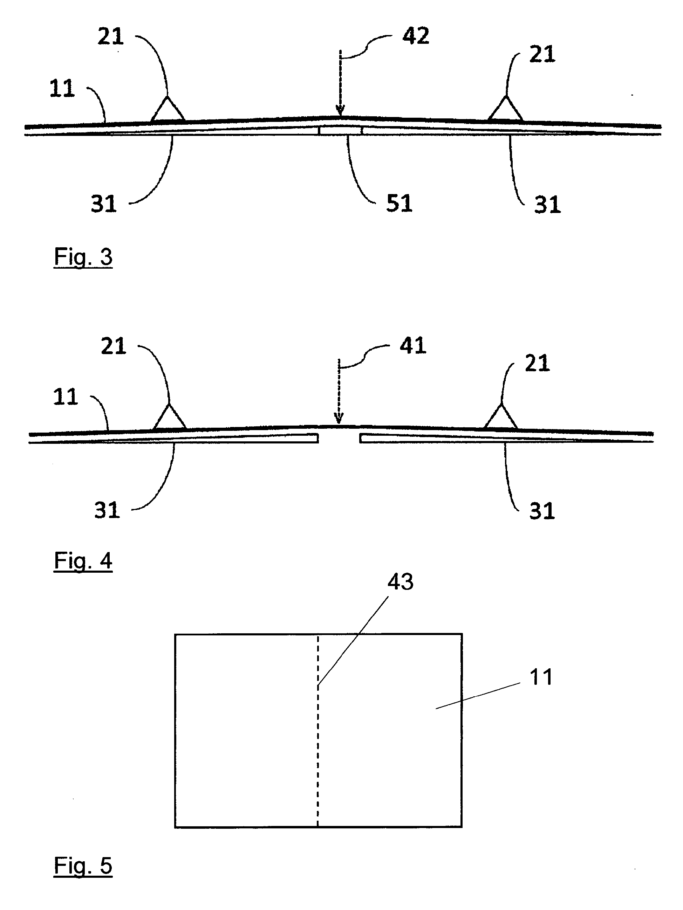

Im Folgenden werden zwei weitere Beispiele dargestellt, bei denen die Solarzelle während der mechanischen Belastung durch mechanisches Anritzen (Figur 3) und durch Laserbearbeitung (Figur 4) lokal mechanisch geschwächt wird.

Die Solarzelle 11 wird dabei mit Hilfe von Saugern 21 auf eine Unterlage 31 aufgelegt. Im Beispiel der Figur 3 weist diese Unterlage 31 eine definierte Oberflächenkrümmung auf, wie dies in der Figur 3 im Querschnitt schematisch erkennbar ist. In diesem Beispiel besteht die Unterlage 31 aus zwei im Querschnitt keilförmigen Elementen, zwischen denen ein Unterstützungselement 51 als Zwischenstück angeordnet ist. Die Unterlage 31 könnte in diesem Beispiel aber selbstverständlich auch einstückig ausgeführt sein. Die Solarzelle 11 wird in beiden Zellhälften mit den Saugern 21 gegen die Unterlage 31 gedrückt, so dass sie aufgrund der Krümmung der Unterlage leicht gebogen wird. Für eine Länge der Solarzelle von 156 mm reicht bspw. ein Höhenunterschied von nur 2 mm zwischen dem höchsten Punkt der Krümmung am Ort des Unterstützungselements 51 und den Rändern der Solarzelle aus, um die für das Teilen erforderlichen Zugspannungen in der Solarzelle 11 zu erzeugen. Durch diese mechanische Belastung entsteht ein großflächiges konstantes gerichtetes Zugspannungsfeld an der Oberfläche der Solarzelle 11. Alternativ zu einer Krümmung kann eine Biegung der Solarzelle auch über eine linienförmige Erhebung oder Kante der Unterlage erfolgen, so dass dann ein linienhaft gerichtetes Zugspannungsfeld entsteht, welches die Risswachstumsrichtung bei der Teilung vorgibt.

Anschließend wird die Solarzelle entlang der gewünschten Bruchlinie lokal mechanisch geschwächt. Dies kann mit einem Laser erfolgen, der vorzugsweise mehrfach über diese Sollbruchlinie geführt wird. So lässt sich eine wie oben beschrieben mechanisch belastete Solarzelle beispielsweise mit folgenden Laserparametern trennen:
- Laserleistung: 3 W
- Pulsdauer: 8 ns
- Wellenlänge: 532 nm
- Spotdurchmesser: 20 µm (gaußförmig)
- Wiederholrate: 15 kHz
- Vorschub je Puls: ca. 5 µm ∼ ca. 75% Überlapp
- Anzahl Überfahrten: 5

Im Beispiel der Figur 3 wird ein mechanischer Ritzer 42 eingesetzt, mit dem die Solarzelle entlang der Sollbruchlinie, die mit der Linie der maximalen mechanischen (Zug-)Spannung übereinstimmen sollte, eingeritzt wird. Dabei wird die Solarzelle dem Ritzer 42 gegenüberliegend durch das Unterstützungselement 51 mechanisch gestützt, um die Kraft des Ritzers 42 aufzunehmen. Der Abstand zwischen der Solarzelle 11 und der Unterlage 31 ist in den Figuren nur zur Illustration vorhanden. Die Solarzelle 11 liegt jedoch vollständig auf der Unterlage 31 auf. Das mechanische Ritzen erfolgt gegebenenfalls mehrmals bis die Solarzelle bricht.

Wird die lokale mechanische Schwächung mit einem Laser durchgeführt, so wird dieser Laser vorzugsweise mehrfach über die Sollbruchlinie geführt, bis die Solarzelle bricht. Hierzu kann eine geeignete Scaneinrichtung für den Laserstrahl eingesetzt werden. Vorzugsweise werden mindestens zwei Überfahrten durchgeführt, um eine hohe Kantenqualität zu erreichen. Dabei wird mindestens einmal die Bruchkante mit dem Laserstrahl vorgeritzt und erst mit der oder den anschließenden Überfahrten der Bruch der Zelle ausgelöst. Dies führt zu einer sehr hohen Kantenqualität der Bruchkante. Die Zelle bricht in Ausrichtung der Schädigung und dem vorhandenem Spannungsfeld. Sobald die Zelle gebrochen ist, wird der Laserstrahl unterbrochen, bspw. durch Abschalten des Lasers.

Bei einer Automatisierung des Prozesses kann der Bruch optisch durch die veränderte Laserauftrefffläche oder mechanisch durch eine veränderte Rückstellkraft an den Saugern 21 festgestellt werden. Beide Zellhälften werden dann mit den Saugern 21 definiert abgelegt.

Figur 4 zeigt ein Beispiel für eine Teilung einer Solarzelle 21 mit einem Laserstrahl 41. In diesem Beispiel wird wiederum eine gekrümmte Unterlage 31 aus zwei im Querschnitt keilförmigen Elementen eingesetzt, gegen die die Solarzelle 11 mit den Saugern 21 gedrückt wird, um eine maximale mechanische Spannung in der Mitte der Zelle entlang der gewünschten Sollbruchlinie zu erhalten. Die Zelle muss an der zu teilenden Stelle in diesem Fall nicht unterstützt werden. Dadurch kann über den Abstand der beiden keilförmigen Elemente der Unterlage 31 auch der Krümmungsradius beeinflusst werden. Durch Vorsehen einer Durchgangsöffnung der Unterlage bzw. zwischen den beiden Elementen der Unterlage 31, wie im Beispiel der Figur 4, kann der Laserstrahl nach dem Bruch der Zelle im freien Raum unter der Zelle defokussieren und damit eine Schädigung der Unterlage verhindert werden.

Figur 5 zeigt schließlich eine Draufsicht auf eine Solarzelle 11, wie sie in den Ausgestaltungen der Figuren 3 und 4 geteilt werden kann. In dieser Figur ist in der Draufsicht die Sollbruchlinie 43 angedeutet, entlang der die lokale mechanische Schädigung mit dem mechanischen Ritzer 42 bzw. dem Laserstrahl 41 erfolgt.

Das vorgeschlagene Verfahren ermöglicht gegenüber den bekannten Verfahren des Standes der Technik eine geringere Schädigung der Objekte, eine automatische Anpassung der Prozessparameter, eine verbesserte Automatisierbarkeit und eine einfache Ausrichtung der Objekte.

### Bezugszeichenliste

- 1: Objekt
- 2: mechanische Belastung
- 3: Schwächung
- 4: Laserstrahl
- 11: Solarzelle
- 21: Saugelemente
- 31: Unterlage
- 41: Laserstrahl
- 42: mechanischer Ritzer
- 43: Sollbruchlinie
- 51: Unterstützungselement

## Patentansprüche

1. Verfahren zum Teilen von plattenförmigen Objekten aus spröden Werkstoffen,
bei dem eine Kombination aus mechanischer Belastung des Objekts (1, 11) und lokaler mechanischer Schwächung oder lokaler thermischer Belastung entlang einer Sollbruchlinie (43) eingesetzt wird, um das Objekt (1, 11) entlang der Sollbruchlinie (43) zu teilen,
**dadurch gekennzeichnet,**
**dass** das Objekt (1, 11) zunächst mechanisch belastet wird, um eine gerichtete Spannung senkrecht zur Sollbruchlinie (43) zu erzeugen, und dann während der mechanischen Belastung entlang der Sollbruchlinie (43) mechanisch geschwächt oder thermisch belastet wird, bis das Objekt (1, 11) entlang der Sollbruchlinie (43) bricht.

2. Verfahren nach Anspruch 1,
**dadurch gekennzeichnet,**
**dass** die mechanische Schwächung durch Modifikation oder Abtrag des Werkstoffes des Objekts (1, 11) mittels Laserbearbeitung mit einem oder mehreren Laserstrahlen (41) erfolgt.

3. Verfahren nach Anspruch 2,
**dadurch gekennzeichnet,**
**dass** der eine oder die mehreren Laserstrahlen (41) für die Laserbearbeitung mehrfach entlang der Sollbruchlinie (43) geführt werden, bis das Objekt (11) entlang der Sollbruchlinie (43) bricht.

4. Verfahren nach Anspruch 1,
**dadurch gekennzeichnet,**
**dass** die die mechanische Schwächung durch mechanisches Ritzen in das Objekt (1, 11) eingebracht wird.

5. Verfahren nach Anspruch 4,
**dadurch gekennzeichnet,**
**dass** das mechanische Ritzen wiederholt entlang der Sollbruchlinie (43) durchgeführt wird, bis das Objekt (1, 11) entlang der Sollbruchlinie (43) bricht.

6. Verfahren nach Anspruch 1,
**dadurch gekennzeichnet,**
**dass** die mechanische Schwächung durch chemisches Ätzen in das Objekt (1, 11) eingebracht wird.

7. Verfahren nach Anspruch 3 oder 5,
**dadurch gekennzeichnet,**
**dass** der Bruch des Objektes (1, 11) entlang der Sollbruchlinie (43) detektiert und die Laserbearbeitung oder das mechanische Ritzen bei einer Detektion des Bruches automatisch unterbrochen wird.

8. Verfahren nach Anspruch 1,
**dadurch gekennzeichnet,**
**dass** die lokale thermische Belastung durch Erwärmung mit einem Laserstrahl und anschließende lokale Kühlung erfolgt.

9. Verfahren nach einem der Ansprüche 1 bis 8,
**dadurch gekennzeichnet,**
**dass** das Objekt (1, 11) durch eine Dreipunktbelastung mechanisch gebogen wird, um die gerichtete Spannung zu erzeugen.

10. Verfahren nach einem der Ansprüche 1 bis 8,
**dadurch gekennzeichnet,**
**dass** das Objekt (1, 11) durch eine Vierpunktbelastung mechanisch gebogen wird, um die gerichtete Spannung zu erzeugen.

11. Verfahren nach Anspruch 9,
**dadurch gekennzeichnet,**
**dass** das Objekt (1, 11) auf eine Unterlage (31) mit einer zur Erzeugung der Spannung im Bereich der Sollbruchlinie (43) geeigneten Erhebung oder Krümmung aufgelegt und beidseitig der Sollbruchlinie (43) gegen die Unterlage (31) gedrückt wird, um die gerichtete Spannung im Bereich der Sollbruchlinie (43) zu erzeugen.

12. Verfahren nach Anspruch 11,
**dadurch gekennzeichnet,**
**dass** die Unterlage (31) eine entlang der Sollbruchlinie (43) verlaufende, durchgängige Öffnung aufweist, durch die der Laserstrahl (41) nach der Teilung propagieren kann.

13. Verfahren nach einem der Ansprüche 1 bis 12 zum Teilen von Halbleitersubstraten für die Mikroelektronik oder Photovoltaik, insbesondere von Wafern oder Solarzellen.
